(19) **Europäisches Patentamt**
**European Patent Office**
**Office européen des brevets**

(11) **EP 3 506 030 A1**

(12) **EUROPEAN PATENT APPLICATION**
published in accordance with Art. 153(4) EPC

(43) Date of publication:
**03.07.2019 Bulletin 2019/27**

(51) Int Cl.:
**G05B 13/04** [(2006.01)]

(21) Application number: **18838887.0**

(22) Date of filing: **17.04.2018**

(86) International application number:
**PCT/CN2018/083349**

(87) International publication number:
**WO 2019/019707 (31.01.2019 Gazette 2019/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.07.2017 CN 201710629040**

(71) Applicant: **Rokae (Shandong) Intelligent Technology Co., Ltd**
**Shandong 273512 (CN)**

(72) Inventors:
• **YU, Wenjin**
  **Shandong 273512 (CN)**
• **HAN, Fengtao**
  **Shandong 273512 (CN)**
• **TUO, Hua**
  **Shandong 273512 (CN)**
• **YUAN, Shunning**
  **Shandong 273512 (CN)**
• **LIU, Wenli**
  **Shandong 273512 (CN)**

(74) Representative: **Inal, Aysegul Seda**
**Yalciner Patent and Consulting Ltd.**
**Tunus Cad. 85/4**
**06680 Kavaklidere, Ankara (TR)**

(54) **NON-ZERO ORIGINAL STATE S-TYPE STOP CURVE VELOCITY RULE AND ONLINE RESOLVING METHOD THEREOF**

(57)     The present invention provides a velocity rule of S-shaped stop profile with non-zero initial conditions and an online solving method thereof. The method comprises: S1, establishing an S-shaped stop trajectory model; S2, setting feasible conditions of trajectory existence for the S-shaped stop trajectory model established in the step S1; S3, solving trajectory parameters of the S-shaped stop trajectory model of the step S1 according to the feasible conditions of trajectory existence set in the step S2; and S4, generating an acceleration trajectory, a velocity trajectory and a position trajectory according to the trajectory parameters resolved in the step S3. The present invention converts a velocity planning solving problem into a solving problem of a nonlinear equation with one unknown, thus simplifying the solving difficulty.

Fig. 4

**Description**

**TECHNICAL FIELD**

The present invention relates to the field of industrial robot technology, in particular, to a velocity rule of S-shaped stop profile with non-zero initial conditions and online solving method thereof.

**BACKGROUND**

Smoothness and rapidity during the movement of robots are important indicators for measuring the ability of motion planning control thereof. In order to ensure the smoothness of the motion trajectory, the robot motion trajectory usually adopts S-shaped velocity planning or an advanced speed planning method. However, due to the complexity of the solution, the advanced motion planning method is often applied only to the motion planning process in which the initial and final states (speed, acceleration) are zero. For the motion process in which the robot stops from any state, the initial state is not zero and the range of variation is large. To ensure the reliability of the solution, a relatively simple T-shaped velocity planning is often adopted. However, since the acceleration is not continuous, the T-type speed planning stop process will bring a large impact to the robot body during the stopping process, thereby causing structural vibration.

**SUMMARY**

It is an object of the present invention to at least address one of the technical drawbacks. To this end, an object of the present invention is to provide a velocity rule of S-shaped stop profile with non-zero initial conditions and online solving method thereof.

To achieve above object, embodiments of the present invention provide a velocity rule of S-shaped stop profile with non-zero initial conditions and online solving method thereof, comprising the steps of:

> S1. establishing an S-shaped stop trajectory model, including: establishing 7 segments of S-shaped velocity planning trajectories:

>> $t \in [t_0, t_1]$, a uniformly-increasing acceleration segment, where the acceleration is jerked from $a_0$ to $a_{lim}$ and the velocity is continuously increased;
>> $t \in [t_1, t_2]$, a uniform acceleration segment, where the acceleration keeps at $a_{lim}$ and the velocity is continuously increased;
>> $t \in [t_2, t_3]$, a uniformly-decreasing acceleration segment, where the acceleration is decreasingly accelerated from $a_{lim}$ to 0, and the velocity is increased to $v_{lim}$;
>> $t \in [t_3, t_4]$, a uniform velocity segment, where the acceleration keeps at 0 and the velocity keeps at $v_{lim}$;
>> $t \in [t_4, t_5]$, a uniformly-decreasing acceleration segment, where the acceleration is decreasingly accelerated from 0 to $-a_{lim}$ and the velocity is continuously decreased;
>> $t \in [t_5, t_6]$, a uniform deceleration segment, where the acceleration keeps at $-a_{lim}$ and the velocity is continuously decreased;
>> $t \in [t_6, t_f]$, a uniformly-increasing acceleration segment, where the acceleration is jerked from $-a_{lim}$ to 0 and the velocity is decreased to 0;
>> defining the stop trajectory motion state $x(t)$, $\dot{x}(t)$, $\ddot{x}(t)$ to meet the following constraints:

>>> (1) Start and stop condition constraints;

>>> $$x(t_0) = 0 \quad \dot{x}(t_0) = v_0 \quad \ddot{x}(t_0) = a_0$$
>>> $$x(t_f) = d \quad \dot{x}(t_f) = 0 \quad \ddot{x}(t_f) = 0$$

>>> (2) Process state constraints:

$$0 < \dot{x}(t) < v_{\lim}$$

$$-a_{\lim} < \ddot{x}(t) < a_{\lim}$$

$$-j_{\mathrm{lim}} < \dddot{x}(t) < j_{\mathrm{lim}}$$

wherein $v_{\mathrm{lim}}$, $a_{\mathrm{lim}}$, $j_{\mathrm{lim}}$ are the velocity, acceleration, and jerk constraints of robots respectively;

S2. setting feasible conditions of trajectory existence for the S-shaped stop trajectory model established in the step S1;
S3. solving trajectory parameters of the S-shaped stop trajectory model in the step S1 according to the feasible conditions of trajectory existence set in the step S2;
S4. generating an acceleration trajectory, a velocity trajectory and a position trajectory according to the trajectory parameters resolved in the step S3.

Further, in the step S1, the time constant is defined as follows:

$$t_{j,a} = t_1 - t_{virtual} = t_3 - t_2$$

$$t_a = t_2 - t_1$$

$$t_v = t_4 - t_3$$

$$t_d = t_6 - t_5$$

$$t_{j,d} = t_f - t_6 = t_5 - t_4$$

for the case where $v_{\mathrm{lim}}$ or $a_{\mathrm{lim}}$ is not reached during the trajectory planning process, the acceleration segment and the deceleration segment are triangular with the velocity being a bell shape, and a maximum acceleration reached in the acceleration segment is defined as , and a maximum negative acceleration reached in the deceleration segment is defined as $a_{\mathrm{max},d}$, and a maximum velocity when the acceleration and deceleration are switched is defined as $v_{\mathrm{max}}$.
Further, in the step S2, the feasible conditions of trajectory existence include:

(1) Basic feasible conditions;

$$-a_{\mathrm{lim}} < a_0 < a_{\mathrm{lim}}$$

$$0 < v_0 < v_{\mathrm{lim}}$$

$$0 < d$$

(2) Feasible conditions of velocity limit;

if $a_0 > 0$, then $\dfrac{a_0^2}{2j_{\mathrm{lim}}} < v_{\mathrm{lim}} - v_0$ and $\dfrac{a_0^2}{2j_{\mathrm{lim}}} < v_0$

if $a_0 < 0$, then $\dfrac{a_0^2}{2j_{\mathrm{lim}}} < v_0$ and $\dfrac{a_0^2}{2j_{\mathrm{lim}}} < v_{\mathrm{lim}} - v_0$

(3) Feasible conditions of distance limit;

if $a_0 > 0$ then:

$$d - \left( \frac{v_0 a_0}{j_{\text{lim}}} + \frac{a_0^3}{3 j_{\text{lim}}^2} \right) > \begin{cases} T\left( v_0 + \dfrac{a_0^2}{2 j_{\text{lim}}} \right) & if\ T < \dfrac{a_{\text{lim}}}{j_{\text{lim}}} \\ \dfrac{1}{2} T\left( v_0 + \dfrac{a_0^2}{2 j_{\text{lim}}} \right)\left( T + \dfrac{v_0}{2 j_{\text{lim}}} + \dfrac{a_0^2}{2 j_{\text{lim}} a_{\text{lim}}} \right) & if\ T = \dfrac{a_{\text{lim}}}{j_{\text{lim}}} \end{cases}$$

if $a_0 < 0$ then:

$$d - \left( \frac{v_0 a_0}{j_{\text{lim}}} + \frac{a_0^3}{3 j_{\text{lim}}^2} \right) > \begin{cases} T\left( v_0 + \dfrac{a_0^2}{2 j_{\text{lim}}} \right) & if\ T < \dfrac{a_{\text{lim}}}{j_{\text{lim}}} \\ \dfrac{1}{2} T\left( v_0 + \dfrac{a_0^2}{2 j_{\text{lim}}} \right)\left( T + \dfrac{v_0}{2 j_{\text{lim}}} + \dfrac{a_0^2}{2 j_{\text{lim}} a_{\text{lim}}} \right) & if\ T = \dfrac{a_{\text{lim}}}{j_{\text{lim}}} \end{cases}$$

$$T = \min \left\{ \sqrt{\frac{v_0}{j_{\text{lim}}} + \frac{a_0^2}{2 j_{\text{lim}}^2}}, \frac{a_{\text{lim}}}{j_{\text{lim}}} \right\} \qquad T = \frac{a_{\text{lim}}}{j_{\text{lim}}}$$

Wherein, , if $T = \frac{a_{\text{lim}}}{j_{\text{lim}}}$ indicates that the acceleration has reached the maximum acceleration limit, at this time, there is a uniform acceleration phase when the trajectory decelerates, and otherwise it indicates that the acceleration does not reach the maximum acceleration limit, at this time, the acceleration is trapezoidal when the trajectory decelerates.

Further, in the step S3, solving the trajectory parameters of the S-shaped stop trajectory model, including the following steps:

(1) For the acceleration segment

if $v_{\text{lim}} - v_0 > \frac{a_{\text{lim}}^2}{j_{\text{lim}}} - \frac{a_0^2}{2 j_{\text{lim}}}$, the maximum acceleration reaches $a_{\text{max},a} = a_{\text{lim}}$, then:

$$t_{j,a} = \frac{a_{\text{lim}}}{j_{\text{lim}}}, \quad t_a = \frac{v_{\text{lim}} - \left( v_0 - \frac{a_0^2}{2 j_{\text{lim}}} \right)}{a_{\text{lim}}} - t_{j,a}$$

if $v_{\text{lim}} - v_0 < \frac{a_{\text{lim}}^2}{j_{\text{lim}}} - \frac{a_0^2}{2 j_{\text{lim}}}$, the maximum acceleration does not reach $a_{\text{max},a} < a_{\text{lim}}$, then:

$$t_{j,a} = \sqrt{\frac{v_{\text{lim}} - \left( v_0 - \frac{a_0^2}{2 j_{\text{lim}}} \right)}{j_{\text{lim}}}}, \quad t_a = 0;$$

(2) For the deceleration segment

if $v_{\text{lim}} > \frac{a_{\text{lim}}^2}{j_{\text{lim}}}$, the maximum a celeration reaches $-a_{\text{max},d} = a_{\text{lim}}$, then: $t_{j,d} = \frac{a_{\text{lim}}}{j_{\text{lim}}}, \quad t_d = \frac{v_{\text{lim}}}{a_{\text{lim}}} - t_{j,d}$

if $v_{\text{lim}} < \frac{a_{\text{lim}}^2}{j_{\text{lim}}}$, the maximum acceleration reaches $-a_{\text{max},d} < a_{\text{lim}}$, then:

$$t_{j,d} = \sqrt{\frac{v_{lim}}{j_{lim}}}, \quad t_d = 0$$

For the above cases, the parameter $t_v$ is obtained according to the following formula:

$$t_v = \frac{d}{v_{lim}} + \frac{v_0 a_0}{j_{lim} v_{lim}} - \frac{a_0^3}{3j_{lim}^2 v_{lim}} - \frac{(2t_{j,a} + t_a)}{2}\left(1 + \frac{v_0}{v_{lim}} - \frac{a_0^2}{2j_{lim} v_{lim}}\right) - \frac{(2t_{j,d} + t_d)}{2}$$

Further, in the step S3, solving the trajectory parameters of the S-shaped stop trajectory model, including the following steps:

if the maximum velocity is not reached, the trajectory does not include the uniform velocity segment, that is, $t_v = 0$ and $v_{max} < v_{lim}$, then, the time parameter $\{t_{j,a}, t_a, t_d, t_{j,d}\}$ meets the following equation:

$$\begin{cases} v_{max} = a_{max,a}(t_{j,a} + t_a) + A = -a_{max,d}(t_{j,d} + t_d) \\ B = \frac{1}{2}(v_{max} + A)(2t_{j,a} + t_a) + \frac{1}{2}v_{max}(2t_{j,d} + t_d) \end{cases}$$

$$A = \left(v_0 - \frac{a_0^2}{2j_{lim}}\right)$$

$$B = d + \left(\frac{v_0 a_0}{j_{lim}} - \frac{a_0^3}{3j_{lim}^2}\right),$$

if the maximum acceleration reaches $a_{max,a} = a_{lim}$ and the maximum deceleration reaches $-a_{max,d} = a_{lim}$, the trajectory includes two segments (positive and negative) of trapezoidal acceleration, and then

$$t_{j,a} = t_{j,d} = \frac{a_{lim}}{j_{lim}}$$

$$t_a = \frac{-\dfrac{3a_{lim}^2}{j_{lim}} - 2A + \sqrt{\Delta}}{2a_{lim}}$$

$$= \frac{-\dfrac{3a_{lim}^2}{j_{lim}} - 2\left(v_0 - \dfrac{a_0^2}{2j_{lim}}\right) + \sqrt{\Delta}}{2a_{lim}}$$

$$t_d = \frac{-\dfrac{3a_{lim}^2}{j_{lim}} + \sqrt{\Delta}}{2a_{lim}}$$

wherein:

$$\Delta = \frac{a_{lim}^4}{j_{lim}^2} + 4a_{lim}B - 2\frac{a_{lim}^2}{j_{lim}}A + 2A^2$$

$$= \frac{a_{lim}^4}{j_{lim}^2} + 4a_{lim}\left(d + \left(\frac{v_0 a_0}{j_{lim}} - \frac{a_0^3}{3j_{lim}^2}\right)\right) - 2\frac{a_{lim}^2}{j_{lim}}\left(v_0 - \frac{a_0^2}{2j_{lim}}\right) + 2\left(v_0 - \frac{a_0^2}{2j_{lim}}\right)^2$$

Further, in the step S3, solving the trajectory parameters of the S-shaped stop trajectory model, including the following steps:

if the maximum acceleration does not reaches $a_{max,a} < a_{lim}$ and the maximum deceleration does not reach $-a_{max,d} = a_{lim}$.the trajectory includes a segment of triangular acceleration and a segment of trapezoidal deceleration, and at this time, substituting

$$t_a = 0, t_{j,d} = \frac{a_{lim}}{j_{lim}}, a_{max,a} = j_{lim}t_{j,a}$$

into the above equation, getting a problem of finding the root ($t_{j,a}$) of a quadratic equation

$$B = \left(j_{lim}t_{j,a}^2 + 2A\right)t_{j,a} + \frac{1}{2}\left(j_{lim}t_{j,a}^2 + A\right)\left(\frac{j_{lim}}{a_{lim}}t_{j,a}^2 + \frac{A}{a_{lim}} + \frac{a_{lim}}{j_{lim}}\right)$$

Further, in the step S3, solving the trajectory parameters of the S-shaped stop trajectory model, including the following steps:

if the maximum acceleration does not reach $a_{max,a} < a_{lim}$ and the maximum deceleration does not reach $-a_{max,d} < a_{lim}$.the trajectory includes two segments (positive and negative) of triangle acceleration, finding the solution through the following equation:

$$B = \left(j_{lim}t_{j,a}^2 + 2A\right)t_{j,a} + \left(j_{lim}t_{j,a}^2 + A\right)\sqrt{t_{j,a}^2 + \frac{A}{j_{lim}}}$$

$$t_a = 0, t_d = 0, a_{max,a} = j_{lim}t_{j,a}, a_{max,d} = j_{lim}t_{j,d}$$

Further, in the step S4,

the acceleration trajectory is obtained by analytical calculation, and the velocity and position trajectories are obtained by discrete numerical integration of the acceleration trajectory, and correcting the time rounding error, the modeling method for S-shaped stop profile is to model all branches of the stop process from any initial condition;

the solving method of the S-shaped stop profile planning problem is to convert a velocity planning solving problem into a problem to find a solution by dividing planning process time , and get the solution through a nonlinear equation with one unknown.

According to the velocity rule of S-shaped stop profile with non-zero initial conditions and online solving method thereof, an S-shaped velocity planning method for the stop process of any non-zero initial conditions, and a corresponding solution method is designed.

The present invention has the following advantages:

1) The S-shaped velocity planning stop process may be satisfied in a state where the initial condition (speed, acceleration) is not zero;

2) The S-shaped stop profile velocity planning including 7 segments and their combinations is provided, and all branches of the S-shaped acceleration and deceleration process may be completely covered;

3) A velocity planning solving problem is converted into a solving problem of a nonlinear equation with one unknown, thus simplifying the solving difficulty.

The additional aspects and advantages of the present invention will be set forth in part in the description which follows, and will be known from the practice of the present invention.

## BRIEF DESCRIPTION OF THE DRAWINGS

The above and/or additional aspects and advantages of the present invention will become apparent and readily understood with combination of the following drawings, in which:

Fig. 1 is a flowchart of a velocity rule of S-shaped stop profile with non-zero initial conditions and online solving method thereof according to an embodiment of the present invention;
Fig. 2 is a view showing a S-shaped velocity trajectory planning according to an embodiment of the present invention;
Fig. 3 is a view of a situation with a triangular acceleration according to an embodiment of the present invention;
Fig. 4 is a view of a parameter solving process according to an embodiment of the present invention.

## DETAILED DESCRIPTION OF THE EMBODIMENTS

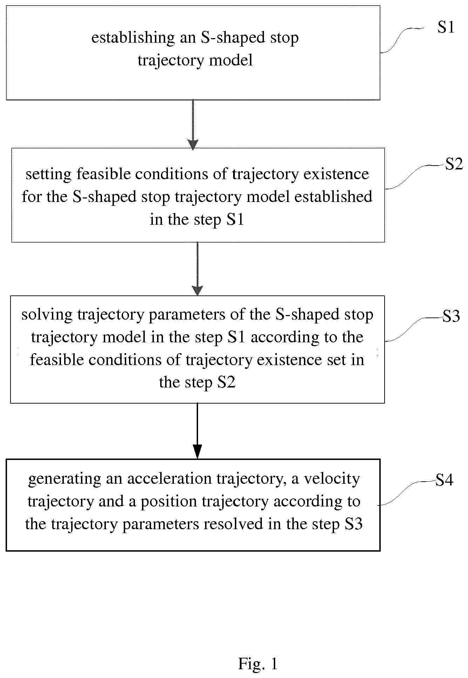

Below is detailed description of embodiments of the present invention, which are shown in the drawings. Throughout the drawings, same or similar reference signs identify same or similar elements or elements having same or similar functions. The embodiments described below in conjunction with the drawings are illustrative, i.e., the embodiments are intended to illustrate the present invention, but not to limit the present invention.
As shown in Fig. 1, a velocity rule of S-shaped stop profile with non-zero initial conditions and online solving method thereof according to an embodiment of the present invention comprises the steps of:

S1. establishing an S-shaped stop trajectory model, including: establishing 7 segments of S-shaped velocity planning trajectories:

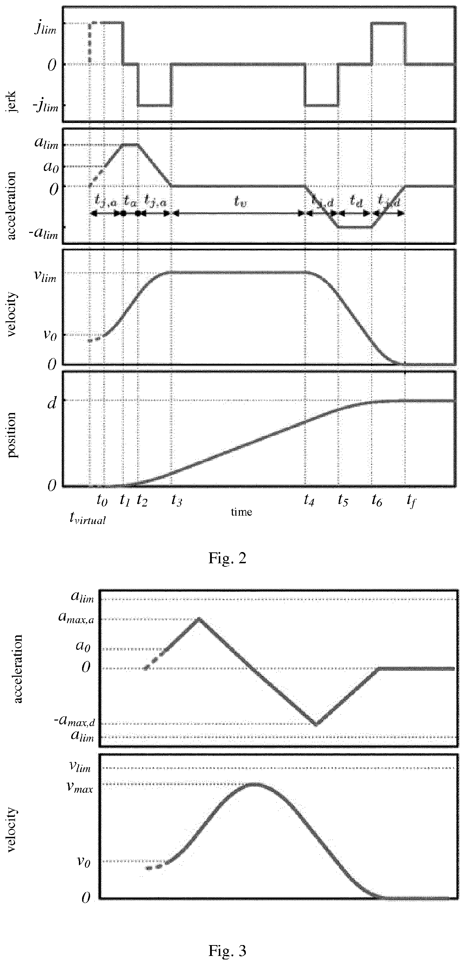

with the goal of time optimization, establishing the 7 segments of S-shaped velocity planning trajectory shown in Fig. 2:

a. $t \in [t_0, t_1]$, a uniformly-increasing acceleration segment, where the acceleration is jerked from $a_0$ to $a_{\lim}$ and the velocity is continuously increased; $t \in [t_1, t_2]$, a uniform acceleration segment, where the acceleration keeps at $a_{lim}$ and the velocity is continuously increased;
b. $t \in [t_2, t_3]$, a uniformly-decreasing acceleration segment, where the acceleration is decreasingly accelerated from $a_{lim}$ to 0, and the velocity is increased to $v_{lim}$;
c. $t \in [t_3, t_4]$ a uniform velocity segment, where the acceleration keeps at 0 and the velocity keeps at $v_{lim}$;
d. $t \in [t_4, t_5]$, a uniformly-decreasing acceleration segment, where the acceleration is decreasingly accelerated from 0 to $-a_{lim}$ and the velocity is continuously decreased;
e. $t \in [t_5, t_6]$, a uniform deceleration segment, where the acceleration keeps at $-a_{lim}$ and the velocity is continuously decreased;
f. $t \in [t_6, t_f]$, a uniformly-increasing acceleration segment, where the acceleration is jerked from $-a_{lim}$ to 0 and the velocity is decreased to 0;

for the case where the total initial velocity is 0, as shown by the dotted line in Fig. 2, the time constant is defined as follows:

$$
\begin{aligned}
t_{j,a} &= t_1 - t_{virtual} = t_3 - t_2 \\
t_a &= t_2 - t_1 \\
t_v &= t_4 - t_3 \\
t_d &= t_6 - t_5 \\
t_{j,d} &= t_f - t_6 = t_5 - t_4
\end{aligned}
\qquad (1)
$$

for the case where $v_{\lim}$ or $a_{\lim}$ is not reached during the trajectory planning process, the acceleration segment and the deceleration segment are triangular with the velocity being a bell shape, as shown in Fig. 3, and a maximum acceleration reached in the acceleration segment is defined as , and a maximum negative acceleration reached in the deceleration segment is defined as $a_{\max,d}$ (negative number), and a maximum velocity when the acceleration and deceleration are switched is defined as $v_{max}$.

The above trajectory is bang-bang switching with motion jerk, and each switching time parameter uniquely determines the trajectory motion process.

And, the stop trajectory motion state $x(t)$, $\dot{x}(t)$, $\ddot{x}(t)$ is defined to meet the following constraints:

a. Start and stop condition constraints;

$$x(t_0) = 0 \quad \dot{x}(t_0) = v_0 \quad \ddot{x}(t_0) = a_0$$
$$x(t_f) = d \quad \dot{x}(t_f) = 0 \quad \ddot{x}(t_f) = 0 \tag{2}$$

b. Process state constraints:

$$0 < \dot{x}(t) < v_{\lim}$$
$$-a_{\lim} < \ddot{x}(t) < a_{\lim} \tag{3}$$
$$-j_{\lim} < \dddot{x}(t) < j_{\lim}$$

wherein $v_{\lim}$, $a_{\lim}$, $j_{\lim}$ are the velocity, acceleration, and jerk constraints of robots respectively.

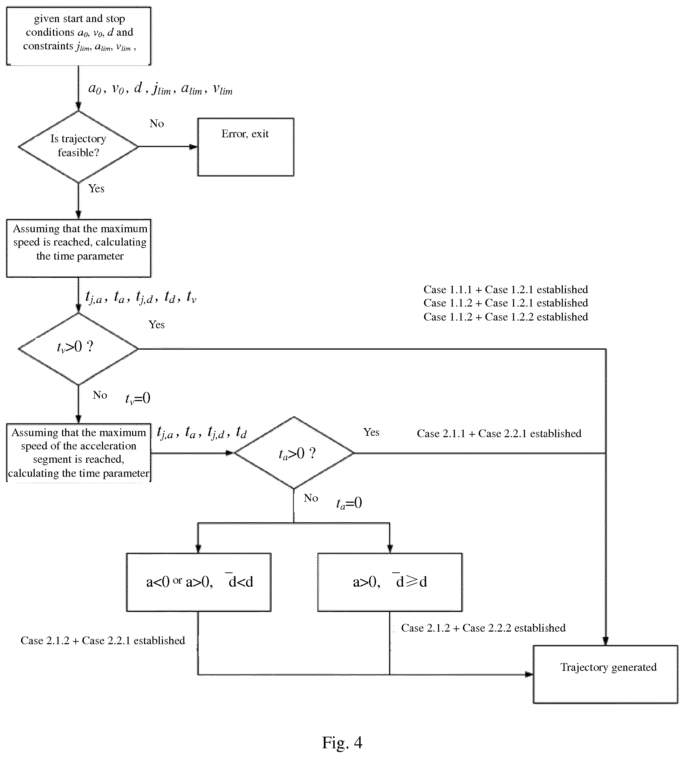

Through the above modeling process, the S-shaped velocity stop trajectory planning problem of any initial conditions is converted into the 7 segments of S-shaped planning time problem that satisfies the constraints (2)(3), wherein the algorithm process is shown in Fig. 4.

S2. setting feasible conditions of trajectory existence for the S-shaped stop trajectory model established in the step S1.

For the S-shaped stop profile model established in the step S1, the wrong parameter setting may result in no solution. To avoid such situation, feasible conditions of trajectory existence are given:

a. Basic feasible conditions;

$$-a_{\lim} < a_0 < a_{\lim}$$
$$0 < v_0 < v_{\lim} \tag{4}$$
$$0 < d$$

b. Feasible conditions of velocity limit;

if $a_0 > 0$, then $\dfrac{a_0^2}{2j_{\lim}} < v_{\lim} - v_0$ and $\dfrac{a_0^2}{2j_{\lim}} < v_0$ if $a_0 < 0$, then $\dfrac{a_0^2}{2j_{\lim}} < v_0$ and $\dfrac{a_0^2}{2j_{\lim}} < v_{\lim} - v_0$

c. Feasible conditions of distance limit;
if $a_0 > 0$ then:

$$d - \left( \frac{v_0 a_0}{j_{\lim}} + \frac{a_0^3}{3j_{\lim}^2} \right) > \begin{cases} T\left( v_0 + \dfrac{a_0^2}{2j_{\lim}} \right) & if\ T < \dfrac{a_{\lim}}{j_{\lim}} \\ \dfrac{1}{2}T\left( v_0 + \dfrac{a_0^2}{2j_{\lim}} \right)\left( T + \dfrac{v_0}{2j_{\lim}} + \dfrac{a_0^2}{2j_{\lim}a_{\lim}} \right) & if\ T = \dfrac{a_{\lim}}{j_{\lim}} \end{cases}$$

if $a_0 < 0$ then:

$$d - \left( \frac{v_0 a_0}{j_{\lim}} + \frac{a_0^3}{3 j_{\lim}^2} \right) > \begin{cases} T \left( v_0 + \frac{a_0^2}{2 j_{\lim}} \right) & \text{if } T < \frac{a_{\lim}}{j_{\lim}} \\ \frac{1}{2} T \left( v_0 + \frac{a_0^2}{2 j_{\lim}} \right) \left( T + \frac{v_0}{2 j_{\lim}} + \frac{a_0^2}{2 j_{\lim} a_{\lim}} \right) & \text{if } T = \frac{a_{\lim}}{j_{\lim}} \end{cases}$$

$$T = \min \left\{ \sqrt{\frac{v_0}{j_{\lim}} + \frac{a_0^2}{2 j_{\lim}^2}}, \frac{a_{\lim}}{j_{\lim}} \right\} \quad , \quad T = \frac{a_{\lim}}{j_{\lim}}$$

wherein                                                                                         if           indicates that the acceleration has reached the maximum acceleration limit, at this time, there is a uniform acceleration phase when the trajectory decelerates, and otherwise it indicates that the acceleration does not reach the maximum acceleration limit, at this time, the acceleration is trapezoidal when the trajectory decelerates.

$$T = \min \left\{ \sqrt{\frac{v_0}{j_{\lim}} + \frac{a_0^2}{2 j_{\lim}^2}}, \frac{a_{\lim}}{j_{\lim}} \right\} \quad , \quad T = \frac{a_{\lim}}{j_{\lim}}$$

wherein                                                                                         if           indicates that the acceleration has reached the maximum acceleration limit, at this time, there is a uniform acceleration phase when the trajectory decelerates, and otherwise it indicates that the acceleration does not reach the maximum acceleration limit, at this time, the acceleration is trapezoidal when the trajectory decelerates.

S3. solving trajectory parameters of the S-shaped stop trajectory model in the step S1 according to the feasible conditions of trajectory existence set in the step S2.

1) Trajectory parameter solving

For the planning process that satisfies the feasible conditions of the trajectory in the step S2, the time parameter solving in step S1 may be divided into the following cases:

Case 1: when the maximum speed is reached: $v_{max} = v_{\lim}$:

Case 1.1: for the acceleration segment:

Case 1.1.1: when the maximum acceleration is reached: $a_{max,a} = a_{\lim}$
Case 1.1.2: when the maximum acceleration is reached: $a_{max,a} < a_{\lim}$

Case 1.2: for the acceleration segment:

Case 1.2.1: when the maximum acceleration is reached: $-a_{max,d} = a_{\lim}$
Case 1.2.2: when the maximum acceleration is reached: $-a_{max,d} < a_{\lim}$

Case 2: when the maximum acceleration is not reached: $v_{max} < v_{\lim}$

Case 2.1: for the acceleration segment:

Case 2.1.1: when the maximum acceleration is reached: $a_{max,a} = a_{\lim}$
Case 2.1.2: when the maximum acceleration is reached: $a_{max,a} < a_{\lim}$

Case 2.2: for the acceleration segment:

Case 2.2.1: when the maximum acceleration is reached: $-a_{max,d} = a_{\lim}$
Case 2.2.2: when the maximum acceleration is reached: $-a_{max,d} < a_{\lim}$

The specific judgment of the branch selection and the parameter calculation process are as follows:

Case 1:

For the acceleration segment

if $v_{\lim} - v_0 > \dfrac{a_{\lim}^2}{j_{\lim}} - \dfrac{a_0^2}{2j_{\lim}}$ , Case 1.1.1 is established and the maximum acceleration reaches $a_{max,a} = a_{\lim}$, then:

$$t_{j,a} = \frac{a_{lim}}{j_{lim}}, \quad t_a = \frac{v_{lim} - \left(v_0 - \dfrac{a_0^2}{2j_{lim}}\right)}{a_{lim}} - t_{j,a}$$

if $v_{\lim} - v_0 < \dfrac{a_{\lim}^2}{j_{\lim}} - \dfrac{a_0^2}{2j_{\lim}}$ , Case 1.1.2 is established and the maximum acceleration does not reach $a_{max,a} < a_{\lim}$, then:

$$t_{j,a} = \sqrt{\frac{v_{lim} - \left(v_0 - \dfrac{a_0^2}{2j_{lim}}\right)}{j_{lim}}}, \quad t_a = 0$$

For the deceleration segment

if $v_{\lim} > \dfrac{a_{\lim}^2}{j_{\lim}}$ , Case 1.2.1 is established and the maximum acceleration reaches $-a_{max,d} = a_{\lim}$, and then:

$$t_{j,d} = \frac{a_{lim}}{j_{lim}}, \quad t_d = \frac{v_{lim}}{a_{lim}} - t_{j,d}$$

if $v_{\lim} < \dfrac{a_{\lim}^2}{j_{\lim}}$ , Case 1.2.2 is established and the maximum acceleration reaches $-a_{max,d} < a_{\lim}$, and then:

$$t_{j,d} = \sqrt{\frac{v_{lim}}{j_{lim}}}, \quad t_d = 0$$

For the above cases, the parameter $t_v$ is obtained according to the following formula:

$$t_v = \frac{d}{v_{lim}} + \frac{v_0 a_0}{j_{lim} v_{lim}} - \frac{a_0^3}{3j_{lim}^2 v_{lim}} - \frac{(2t_{j,a}+t_a)}{2}\left(1 + \frac{v_0}{v_{lim}} - \frac{a_0^2}{2j_{lim}v_{lim}}\right) - \frac{(2t_{j,d}+t_d)}{2}(5)$$

Case 2:

when the maximum acceleration is not reached:
if the maximum velocity is not reached, the trajectory does not include the uniform velocity segment, that is, $t_v = 0$, and $v_{max} < v_{\lim}$ then, the time parameter $\{t_{j,a}, t_a, t_d, t_{j,d}\}$ meets the following equation:

$$\begin{cases} v_{max} = a_{max,a}\left(t_{j,a} + t_a\right) + A = -a_{max,d}\left(t_{j,d} + t_d\right) \\ B = \dfrac{1}{2}\left(v_{max} + A\right)\left(2t_{j,a} + t_a\right) + \dfrac{1}{2}v_{max}\left(2t_{j,d} + t_d\right) \end{cases}$$

$$A = \left(v_0 - \frac{a_0^2}{2j_{lim}}\right)$$

$$B = d + \left(\frac{v_0 a_0}{j_{lim}} - \frac{a_0^3}{3j_{lim}^2}\right)$$

Case 2.1.1 Established + Case 2.2.1 Established; the maximum acceleration reaches $a_{max,a} = a_{lim}$, and the maximum deceleration reaches $-a_{max,d} = a_{lim}$. Then, the trajectory includes two segments (positive and negative) of trapezoidal acceleration. At this time, substituting

$$t_{j,a} = t_{j,d} = \frac{a_{lim}}{j_{lim}}$$

$$t_a = \frac{-\dfrac{3a_{lim}^2}{j_{lim}} - 2A + \sqrt{\Delta}}{2a_{lim}}$$

$$= \frac{-\dfrac{3a_{lim}^2}{j_{lim}} - 2\left(v_0 - \dfrac{a_0^2}{2j_{lim}}\right) + \sqrt{\Delta}}{2a_{lim}}$$

$$t_d = \frac{-\dfrac{3a_{lim}^2}{j_{lim}} + \sqrt{\Delta}}{2a_{lim}}$$

wherein:

$$\Delta = \frac{a_{lim}^4}{j_{lim}^2} + 4a_{lim}B - 2\frac{a_{lim}^2}{j_{lim}}A + 2A^2$$

$$= \frac{a_{lim}^4}{j_{lim}^2} + 4a_{lim}\left(d + \left(\frac{v_0 a_0}{j_{lim}} - \frac{a_0^3}{3j_{lim}^2}\right)\right) - 2\frac{a_{lim}^2}{j_{lim}}\left(v_0 - \frac{a_0^2}{2j_{lim}}\right) + 2\left(v_0 - \frac{a_0^2}{2j_{lim}}\right)^2$$

**Case 2.1.2 Established + Case 2.2.1 Established;** the maximum acceleration does not reach $a_{max,a} < a_{lim}$, and the maximum deceleration reaches $-a_{max,d} = a_{lim}$. Then, the trajectory includes a segment of triangular acceleration and a segment of trapezoidal deceleration. At this time, substituting

$$t_a = 0, t_{j,d} = \frac{a_{lim}}{j_{lim}}, a_{max,a} = j_{lim}t_{j,a}$$

into the above equation, getting a problem of finding the root ($t_{j,a}$) of a quadratic equation

$$B = \left(j_{lim}t_{j,a}^2 + 2A\right)t_{j,a} + \frac{1}{2}\left(j_{lim}t_{j,a}^2 + A\right)\left(\frac{j_{lim}}{a_{lim}}t_{j,a}^2 + \frac{A}{a_{lim}} + \frac{a_{lim}}{j_{lim}}\right) \qquad (6)$$

**Case 2.1.2 Established + Case 2.2.2 Established;** the maximum acceleration does not reach $a_{max,a} < a_{lim}$, and the maximum deceleration does not reach $-a_{max,d} < a_{lim}$. The trajectory includes two segments (positive and negative) of triangle acceleration, finding the solution through the following equation:

$$B = \left(j_{lim}t_{j,a}^2 + 2A\right)t_{j,a} + \left(j_{lim}t_{j,a}^2 + A\right)\sqrt{t_{j,a}^2 + \frac{A}{j_{lim}}}$$

$$t_a = 0, t_d = 0, a_{max,a} = j_{lim}t_{j,a}, a_{max,d} = j_{lim}t_{j,d} \qquad (7)$$

For the above parameter solutions (5)\(6)\(7), a nonlinear equation solving method is used to find a solution that satisfies the constraint conditions as a feasible solution.

S4. generating an acceleration trajectory, a velocity trajectory and a position trajectory according to the trajectory parameters resolved in the step S3.

1) Trajectory generation

The acceleration trajectory is obtained by analytical calculation, and the velocity and position trajectories are obtained by discrete numerical integration of the acceleration trajectory, and correcting the time rounding error. The modeling method for S-shaped stop profile is, in particular, to model all branches of the stop process from any initial condition.

2) The solving method of the S-shaped stop profile planning problem is, in particular, to convert a velocity planning solving problem into a problem to find a solution by dividing planning process time , and get the solution through a nonlinear equation with one unknown.

According to the velocity rule of S-shaped stop profile with non-zero initial conditions and online solving method thereof, an S-shaped velocity planning method for the stop process of any non-zero initial conditions, and a corresponding solution method is designed.

The present invention has the following advantages:

1) The S-shaped velocity planning stop process may be satisfied in a state where the initial condition (speed, acceleration) is not zero;
2) The S-shaped stop profile velocity planning including 7 segments and their combinations is provided, and all branches of the S-shaped acceleration and deceleration process may be completely covered;
3) a velocity planning solving problem is converted into a solving problem of a nonlinear equation with one unknown, thus simplifying the solving difficulty.

In the description of the present specification, the description with reference to the terms "an embodiment", "some embodiments", "example", "specific example", or "some examples" and the like means that specific features, structures, materials, or characteristics described in connection with the embodiments or examples are included in at least one embodiment or example of the present invention. In the present specification, the schematic representation of the above terms does not necessarily mean the same embodiment or example. Furthermore, the particular features, structures, materials, or characteristics described may be combined in a suitable manner in any one or more embodiments or examples.

Although embodiments of the invention have been shown and described above, it will be understood that the above embodiments are illustrative and are not to be construed as limiting the present invention. Changes, modifications, alterations and variations of the above-described embodiments may be made by those skilled in the art without departing from the scope of the present invention. The scope of the present invention is defined by the appended claims and their equivalents.

**Claims**

1. A velocity rule of S-shaped stop profile with non-zero initial conditions and online solving method thereof, **characterized by** comprising the steps of:

   S1. establishing an S-shaped stop trajectory model, including: establishing 7 segments of S-shaped velocity planning trajectories:

   $t \in [t_0, t_1]$, a uniformly-increasing acceleration segment, where the acceleration is jerked from $a_0$ to $a_{lim}$ and the velocity is continuously increased;

   $t \in [t_1, t_2]$, a uniform acceleration segment, where the acceleration keeps at $a_{lim}$ and the velocity is continuously increased;

   $t \in [t_2, t_3]$, a uniformly-decreasing acceleration segment, where the acceleration is decreasingly accelerated from $a_{lim}$ to 0, and the velocity is increased to $v_{lim}$;

   $t \in [t_3, t_4]$, a uniform velocity segment, where the acceleration keeps at 0 and the velocity keeps at $v_{lim}$;

   $t \in [t_4, t_5]$, a uniformly-decreasing acceleration segment, where the acceleration is decreasingly accelerated from 0 to $-a_{lim}$ and the velocity is continuously decreased;

   $t \in [t_5, t_6]$, a uniform deceleration segment, where the acceleration keeps at $-a_{lim}$ and the velocity is continuously decreased;

   $t \in [t_6, t_f]$, a uniformly-increasing acceleration segment, where the acceleration is jerked from $-a_{lim}$ to 0 and the velocity is decreased to 0;

   defining the stop trajectory motion state $x(t)$, $\dot{x}(t)$, $\ddot{x}(t)$ to meet the following constraints:

   (1) start and stop condition constraints:

   $$x(t_0) = 0 \quad \dot{x}(t_0) = v_0 \quad \ddot{x}(t_0) = a_0$$
   $$x(t_f) = d \quad \dot{x}(t_f) = 0 \quad \ddot{x}(t_f) = 0$$

   (2) process state constraints:

   $$0 < \dot{x}(t) < v_{\lim}$$

   $$-a_{\lim} < \ddot{x}(t) < a_{\lim}$$

   $$-j_{\lim} < \dddot{x}(t) < j_{\lim}$$

   wherein $v_{lim}$, $a_{lim}$, $j_{lim}$ are the velocity, acceleration, and jerk constraints of robots respectively;

   S2. setting feasible conditions of trajectory existence for the S-shaped stop trajectory model established in the step S1;
   S3. solving trajectory parameters of the S-shaped stop trajectory model in the step S1 according to the feasible conditions of trajectory existence set in the step S2;
   S4. generating an acceleration trajectory, a velocity trajectory and a position trajectory according to the trajectory parameters resolved in the step S3.

2. The velocity rule of S-shaped stop profile with non-zero initial conditions and online solving method thereof according to claim 1, **characterized in that** in the step S1, the time constant is defined as follows:

   $$t_{j,a} = t_1 - t_{virtual} = t_3 - t_2$$

   $$t_a = t_2 - t_1$$

$$t_v = t_4 - t_3$$

$$t_d = t_6 - t_5$$

$$t_{j,d} = t_f - t_6 = t_5 - t_4$$

for the case where $v_{lim}$ or $a_{lim}$ is not reached during the trajectory planning process, the acceleration segment and the deceleration segment are triangular with the velocity being a bell shape, and a maximum acceleration reached in the acceleration segment is defined as , and a maximum negative acceleration reached in the deceleration segment is defined as $a_{max,d}$, and a maximum velocity when the acceleration and deceleration are switched is defined as $v_{max}$.

3. The velocity rule of S-shaped stop profile with non-zero initial conditions and online solving method thereof according to claim 1, **characterized in that** in the step S2, the feasible conditions of trajectory existence include:

(1) basic feasible conditions;

$$-a_{lim} < a_0 < a_{lim}$$

$$0 < v_0 < v_{lim}$$

$$0 < d$$

(2) feasible conditions of velocity limit:

if $a_0 > 0$, then $\dfrac{a_0^2}{2j_{lim}} < v_{lim} - v_0$ and $\dfrac{a_0^2}{2j_{lim}} < v_0$

if $a_0 < 0$, then $\dfrac{a_0^2}{2j_{lim}} < v_0$ and $\dfrac{a_0^2}{2j_{lim}} < v_{lim} - v_0$

(3) feasible conditions of distance limit:

if $a_0 > 0$ then

$$d - \left( \frac{v_0 a_0}{j_{lim}} + \frac{a_0^3}{3j_{lim}^2} \right) > \begin{cases} T\left( v_0 + \dfrac{a_0^2}{2j_{lim}} \right) & if\ T < \dfrac{a_{lim}}{j_{lim}} \\[4mm] \dfrac{1}{2}T\left( v_0 + \dfrac{a_0^2}{2j_{lim}} \right)\left( T + \dfrac{v_0}{2j_{lim}} + \dfrac{a_0^2}{2j_{lim}a_{lim}} \right) & if\ T = \dfrac{a_{lim}}{j_{lim}} \end{cases}$$

if $a_0 < 0$ then

$$d - \left( \frac{v_0 a_0}{j_{\text{lim}}} + \frac{a_0^3}{3 j_{\text{lim}}^2} \right) > \begin{cases} T \left( v_0 + \frac{a_0^2}{2 j_{\text{lim}}} \right) & \text{if } T < \frac{a_{\text{lim}}}{j_{\text{lim}}} \\ \frac{1}{2} T \left( v_0 + \frac{a_0^2}{2 j_{\text{lim}}} \right) \left( T + \frac{v_0}{2 j_{\text{lim}}} + \frac{a_0^2}{2 j_{\text{lim}} a_{\text{lim}}} \right) & \text{if } T = \frac{a_{\text{lim}}}{j_{\text{lim}}} \end{cases}$$

$$T = \min \left\{ \sqrt{\frac{v_0}{j_{\text{lim}}} + \frac{a_0^2}{2 j_{\text{lim}}^2}}, \frac{a_{\text{lim}}}{j_{\text{lim}}} \right\} \quad , \quad T = \frac{a_{\text{lim}}}{j_{\text{lim}}}$$

wherein $T = \frac{a_{\text{lim}}}{j_{\text{lim}}}$ if indicates that the acceleration has reached the maximum acceleration limit, at this time, there is a uniform acceleration phase when the trajectory decelerates, and otherwise it indicates that the acceleration does not reach the maximum acceleration limit, at this time, the acceleration is trapezoidal when the trajectory decelerates.

4. The velocity rule of S-shaped stop profile with non-zero initial conditions and online solving method thereof according to claim 1, **characterized in that** in the step S3, solving the trajectory parameters of the S-shaped stop trajectory model, including the following steps:

(1) for the acceleration segment

if $v_{\text{lim}} - v_0 > \frac{a_{\text{lim}}^2}{j_{\text{lim}}} - \frac{a_0^2}{2 j_{\text{lim}}}$, the maximum acceleration reaches $a_{\text{max},a} = a_{\text{lim}}$, and:

$$t_{j,a} = \frac{a_{\text{lim}}}{j_{\text{lim}}}, \quad t_a = \frac{v_{\text{lim}} - \left( v_0 - \frac{a_0^2}{2 j_{\text{lim}}} \right)}{a_{\text{lim}}} - t_{j,a}$$

if $v_{\text{lim}} - v_0 < \frac{a_{\text{lim}}^2}{j_{\text{lim}}} - \frac{a_0^2}{2 j_{\text{lim}}}$, the maximum acceleration does not reach $a_{\text{max},a} < a_{\text{lim}}$, then:

$$t_{j,a} = \sqrt{\frac{v_{\text{lim}} - \left( v_0 - \frac{a_0^2}{2 j_{\text{lim}}} \right)}{j_{\text{lim}}}}, \quad t_a = 0 ;$$

(2) for the deceleration segment

if $v_{\text{lim}} > \frac{a_{\text{lim}}^2}{j_{\text{lim}}}$, the maximum acceleration reaches $-a_{\text{max},d} = a_{\text{lim}}$, then:

$$t_{j,d} = \frac{a_{\text{lim}}}{j_{\text{lim}}}, \quad t_d = \frac{v_{\text{lim}}}{a_{\text{lim}}} - t_{j,d}$$

if $v_{\text{lim}} < \frac{a_{\text{lim}}^2}{j_{\text{lim}}}$, the maximum acceleration reaches $-a_{\text{max},d} < a_{\text{lim}}$, then:

$$t_{j,d} = \sqrt{\frac{v_{\text{lim}}}{j_{\text{lim}}}}, \quad t_d = 0$$

for the above cases, the parameter $t_v$ is obtained according to the following formula:

$$t_v = \frac{d}{v_{lim}} + \frac{v_0 a_0}{j_{lim} v_{lim}} - \frac{a_0^3}{3j_{lim}^2 v_{lim}} - \frac{(2t_{j,a}+t_a)}{2}\left(1 + \frac{v_0}{v_{lim}} - \frac{a_0^2}{2j_{lim}v_{lim}}\right) - \frac{(2t_{j,d}+t_d)}{2} \quad .$$

5. The velocity rule of S-shaped stop profile with non-zero initial conditions and online solving method thereof according to claim 1, **characterized in that** in the step S3, solving the trajectory parameters of the S-shaped stop trajectory model, including the following steps:

if the maximum velocity is not reached, the trajectory does not include the uniform velocity segment, that is, $t_v$ = 0, and $v_{max} < v_{lim}$, then, the time parameter $\{t_{j,a}, t_a, t_d, t_{j,d}\}$ meets the following equation:

$$\begin{cases} v_{max} = a_{max,a}(t_{j,a} + t_a) + A = -a_{max,d}(t_{j,d} + t_d) \\ B = \frac{1}{2}(v_{max} + A)(2t_{j,a} + t_a) + \frac{1}{2}v_{max}(2t_{j,d} + t_d) \end{cases}$$

$$A = \left(v_0 - \frac{a_0^2}{2j_{lim}}\right)$$

$$B = d + \left(\frac{v_0 a_0}{j_{lim}} - \frac{a_0^3}{3j_{lim}^2}\right),$$

if the maximum acceleration reaches $a_{max,a} = a_{lim}$ , and the maximum deceleration reaches $-a_{max,d} = a_{lim}$, the trajectory includes two segments (positive and negative) of trapezoidal acceleration, and then

$$t_{j,a} = t_{j,d} = \frac{a_{lim}}{j_{lim}}$$

$$t_a = \frac{-\frac{3a_{lim}^2}{j_{lim}} - 2A + \sqrt{\Delta}}{2a_{lim}}$$

$$= \frac{-\frac{3a_{lim}^2}{j_{lim}} - 2\left(v_0 - \frac{a_0^2}{2j_{lim}}\right) + \sqrt{\Delta}}{2a_{lim}}$$

$$t_d = \frac{-\frac{3a_{lim}^2}{j_{lim}} + \sqrt{\Delta}}{2a_{lim}}$$

wherein:

$$\Delta = \frac{a_{lim}^4}{j_{lim}^2} + 4a_{lim}B - 2\frac{a_{lim}^2}{j_{lim}}A + 2A^2$$

$$= \frac{a_{lim}^4}{j_{lim}^2} + 4a_{lim}\left(d + \left(\frac{v_0 a_0}{j_{lim}} - \frac{a_0^3}{3j_{lim}^2}\right)\right) - 2\frac{a_{lim}^2}{j_{lim}}\left(v_0 - \frac{a_0^2}{2j_{lim}}\right) + 2\left(v_0 - \frac{a_0^2}{2j_{lim}}\right)^2 \quad .$$

6. The velocity rule of S-shaped stop profile with non-zero initial conditions and online solving method thereof according to claim 1, **characterized in that** in the step S3, solving the trajectory parameters of the S-shaped stop trajectory model, including the following steps:

if the maximum acceleration does not reaches $a_{max,a} < a_{lim}$, and the maximum deceleration reaches $-a_{max,d} = a_{lim}$, the trajectory includes a segment of triangular acceleration and a segment of trapezoidal deceleration, and at this time, substituting

$$t_a = 0, t_{j,d} = \frac{a_{lim}}{j_{lim}}, a_{max,a} = j_{lim}t_{j,a}$$

into the above equation, getting a problem of finding the root ($t_{j,a}$) of a quadratic equation

$$B = \left(j_{lim}t_{j,a}^2 + 2A\right)t_{j,a} + \frac{1}{2}\left(j_{lim}t_{j,a}^2 + A\right)\left(\frac{j_{lim}}{a_{lim}}t_{j,a}^2 + \frac{A}{a_{lim}} + \frac{a_{lim}}{j_{lim}}\right)$$

**7.** The velocity rule of S-shaped stop profile with non-zero initial conditions and online solving method thereof according to claim 1, **characterized in that** in the step S3, solving the trajectory parameters of the S-shaped stop trajectory model, including the following steps:

if the maximum acceleration does not reaches $a_{max,a} < a_{lim}$, and the maximum deceleration does not reach $-a_{max,d} < a_{lim}$, and the trajectory includes two segments (positive and negative) of triangle acceleration, finding the solution through the following equation:

$$B = \left(j_{lim}t_{j,a}^2 + 2A\right)t_{j,a} + \left(j_{lim}t_{j,a}^2 + A\right)\sqrt{t_{j,a}^2 + \frac{A}{j_{lim}}}$$

$$t_a = 0, t_d = 0, a_{max,a} = j_{lim}t_{j,a}, a_{max,d} = j_{lim}t_{j,d} \quad .$$

**8.** The velocity rule of S-shaped stop profile with non-zero initial conditions and online solving method thereof according to claim 1, **characterized in that** in the step S4,

the acceleration trajectory is obtained by analytical calculation, and the velocity and position trajectories are obtained by discrete numerical integration of the acceleration trajectory, and correcting the time rounding error, the modeling method for S-shaped stop profile is to model all branches of the stop process from any initial condition;

the solving method of the S-shaped stop profile planning problem is to convert a velocity planning solving problem into a problem to find a solution by dividing planning process time, and get the solution through a nonlinear equation with one unknown.

establishing an S-shaped stop
trajectory model ⟋ S1

setting feasible conditions of trajectory existence
for the S-shaped stop trajectory model established
in the step S1 ⟋ S2

solving trajectory parameters of the S-shaped stop
trajectory model in the step S1 according to the
feasible conditions of trajectory existence set in
the step S2 ⟋ S3

generating an acceleration trajectory, a velocity
trajectory and a position trajectory according to
the trajectory parameters resolved in the step S3 ⟋ S4

Fig. 1

Fig. 2

Fig. 3

given start and stop conditions $a_0$, $v_0$, $d$ and constraints $j_{lim}$, $a_{lim}$, $v_{lim}$,

$a_0$, $v_0$, $d$, $j_{lim}$, $a_{lim}$, $v_{lim}$

Is trajectory feasible? — No → Error, exit

Yes

Assuming that the maximum speed is reached, calculating the time parameter

$t_{j,a}$, $t_a$, $t_{j,d}$, $t_d$, $t_v$

$t_v > 0$ ? — Yes →

Case 1.1.1 + Case 1.2.1 established
Case 1.1.2 + Case 1.2.1 established
Case 1.1.2 + Case 1.2.2 established

No   $t_v = 0$

Assuming that the maximum speed of the acceleration segment is reached, calculating the time parameter

$t_{j,a}$, $t_a$, $t_{j,d}$, $t_d$

$t_a > 0$ ? — Yes → Case 2.1.1 + Case 2.2.1 established

No   $t_a = 0$

$a < 0$ or $a > 0$, $\bar{d} < d$

$a > 0$, $\bar{d} \geqslant d$

Case 2.1.2 + Case 2.2.1 established

Case 2.1.2 + Case 2.2.2 established

Trajectory generated

Fig. 4

<table>
<tr><td colspan="2">**INTERNATIONAL SEARCH REPORT**</td><td>International application No.<br>PCT/CN2018/083349</td></tr>
</table>

**A. CLASSIFICATION OF SUBJECT MATTER**

G05B 13/04 (2006.01) i

According to International Patent Classification (IPC) or to both national classification and IPC

**B. FIELDS SEARCHED**

Minimum documentation searched (classification system followed by classification symbols)

G05B; G05D; G06F

Documentation searched other than minimum documentation to the extent that such documents are included in the fields searched

Electronic data base consulted during the international search (name of data base and, where practicable, search terms used)

CNABS; CNTXT; TWTXT; VEN; CJFD; CNKI: 非零, 初始, 态, 速度, 运动, 规划, 平滑, "s", 曲线, 函数, 时间, 过程, 时段, 划分, 分配, initial, status, state, non 1d zero, s, curve, shape, function, speed, velocity, accelerat+, decelerat+, position, control+, solv+, time, divi+, assign+

**C. DOCUMENTS CONSIDERED TO BE RELEVANT**

| Category* | Citation of document, with indication, where appropriate, of the relevant passages | Relevant to claim No. |
|---|---|---|
| X | 李崇仕. PCB 数控钻床的研究及三阶 S 曲线轨迹规划算法. 西华大学硕士论文，01 May 2013 (01.05.2013), pp. 44-56. (LI, Chongshi. Study of PCB Drilling Machine and Third Order S-curve Trajectory Planning Algorithm. XIHUA UNIVERSITY MASTER PAPER) | 1, 2, 8 |
| PX | CN 107436555 A (LUOSHI SHANDONG INTELLIGENT TECHNOLOGY CO., LTD.) 05 December 2017 (05.12.2017), entire document | 1-8 |
| A | CN 106354102 A (XIPING LANGMA CNC EQUIPMENT CO., LTD.) 25 January 2017 (25.01.2017), entire document | 1-8 |
| A | CN 106168790 A (SOUTH CHINA UNIVERSITY OF TECHNOLOGY) 30 November 2016 (30.11.2016), entire document | 1-8 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 July 2018 | 23 July 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LIU, Nan<br><br>Telephone No. (86-10) 62085796 |

Form PCT/ISA /210 (second sheet) (July 2009)

## INTERNATIONAL SEARCH REPORT

International application No.

PCT/CN2018/083349

C (Continuation).      DOCUMENTS CONSIDERED TO BE RELEVANT

| Category* | Citation of document, with indication, where appropriate, of the relevant passages | Relevant to claim No. |
|---|---|---|
| A | CN 106444635 A (SHENZHEN LEADSHINE TECHNOLOGY CO., LTD.) 22 February 2017 (22.02.2017), entire document | 1-8 |
| A | JP 2000083392 A (MATSUSHITA ELECTRIC IND CO., LTD.) 21 March 2000 (21.03.2000), entire document | 1-8 |

Form PCT/ISA /210 (continuation of second sheet ) (July 2009)

## INTERNATIONAL SEARCH REPORT
### Information on patent family members

| International application No. |
|---|
| PCT/CN2018/083349 |

| Patent Documents referred in the Report | Publication Date | Patent Family | Publication Date |
|---|---|---|---|
| CN 107436555 A | 05 December 2017 | None | |
| CN 106354102 A | 25 January 2017 | None | |
| CN 106168790 A | 30 November 2016 | None | |
| CN 106444635 A | 22 February 2017 | None | |
| JP 2000083392 A | 21 March 2000 | None | |

Form PCT/ISA /210 (patent family annex) (July 2009)